# EUROPEAN PATENT SPECIFICATION

(11) **EP 1 642 152 B1**
(45) Date of publication and mention of the grant of the patent: **24.08.2011**
(21) Application number: 04741948.6
(22) Date of filing: 02.07.2004
(51) Int. Cl.: G01S 1/00, H04B 1/707

(54) **GPS RECEIVER WITH FAST ACQUISITION TIME**
GPS EMPFÄNGER MIT KURZER ERFASSUNGSZEIT
RECEPTEUR DU SYSTEME MONDIAL DE LOCALISATION A TEMPS D'ACQUISITION RAPIDE

(30) Priority: 03.07.2003 US 484737 P
(43) Date of publication of application: 05.04.2006
(60) Divisional application: 10009986.0
(73) Proprietor: Qualcomm Incorporated, San Diego, CA 92121 (US)
(72) Inventor: PIAZZA, Francesco, CH-6934 Bioggio (CH)
(74) Representative: Wagner & Geyer
(86) International application number: PCT/EP2004/051336
(87) International publication number: WO 2005/003807

(56) References cited:
- EP-A- 1 205 764
- US-A- 5 955 986
- US-A1- 2003 081 660
- US-B1- 6 208 291

## Description

### Field of the invention

Subject of the present invention is a navigation satellite receiver, and more particularly a GPS receiver circuit wherein the acquisition time, that is the time needed to obtain a first positional fix after a complete shutdown of the system is particularly low.

### Description of related art

GPS receiver systems are nowadays used in a multitude of applications, and it can be truly said that after a start phase, in which its applications were essentially confined to military, research, and few specialized fields, like maritime navigation, GPS is rapidly finding a place in many other professional and leisure applications.

As it is known, a GPS receiver is designed to determine its location by correlating the radio signal emitted from a constellation of space vehicles orbiting around the earth. It is a common problem with GPS receivers that they require a long start-up time before delivering a first positional fix after a cold start.

During this start-up time the receiver has to acquire the signal of the available space vehicles, and download the navigational data from the 50 bps GPS NAV stream or from other sources. These operations are inherently time-consuming, so that the start time after a cold start is commonly of the order of several tens of seconds.

This long start-up time, often indicated as time to the first fix (TTFF), is a limiting factor in many applications of GPS. In particular in certain low-rate, low power applications, like for example location services in portable telecommunication networks and the like, where it would be desirable to supply the GPS module only for short periods of time.

US6208291 describes a GPS receiver with a large number of correlators in parallel, which are arranged to compute correlation values for 2046 distinct lags of the C/A code. The multi-correlator unit computes correlation values for all possible phase shifts in a C/A frame, with a granularity of ½ chip, and comprises 64 fully- independent correlators, each of which is running at a 64 times the chipping rate, and producing correlation values for 32 adjacent lags. While the acquisition time is reduced because of the very high parallelization of hardware, it is not optimal in terms of power consumption and silicon space use.

An object of the present application is a GPS receiver overcoming the above shortcoming of the prior art, and a GPS receiver providing a faster time for delivering a first positional fix.

### Brief summary of the invention

The above object is attained by a GPS receiver comprising the characteristics of the appended claims, and in particular by Signal processor for use in a navigation satellite receiver, comprising a plurality of tracking modules, for processing a plurality of navigation ranging signals, each tracking module comprising:
- a pseudorandom code generator, for generating a replica code sequence;
- a correlator, for obtaining a time-integrated correlation value between a navigation ranging signal and said replica code sequence; wherein said signal processor has a first functioning mode, and said signal processor is arranged to simultaneously dump said time-integrated correlation values from said multiplicity of tracking modules when in said first functioning mode.

### Brief Description of the Drawings

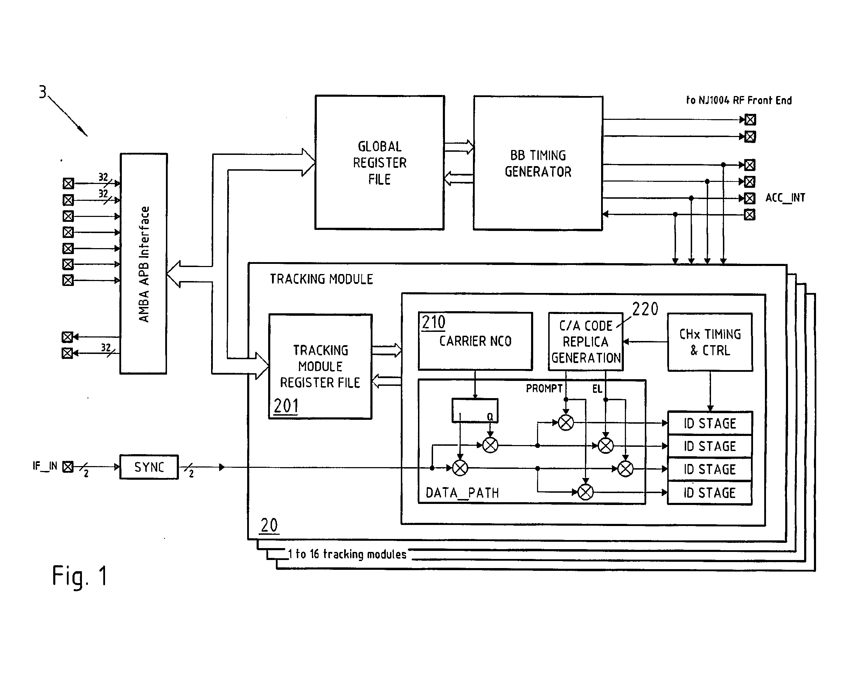

Figure 1 shows a GPS processor according to the present invention.
Figure 2 shows a timing diagram of a signal processor according to the present invention.

### Detailed Description of the Invention

In a typical GPS Receiver the 1575.42 MHz signal received from the Space Vehicles (SV) is down-converted to an intermediate frequency (IF), for example 4.092 MHz by an appropriate RF front-end. An example of a RF down-converter adapted to this function is described in European Patent Application EP 1'198'068, in the name of the applicant.

The IF signal is then fed, among others, to a correlation processor 3 according to the invention, whose function is to de-spread the signals received from each SV, and to align them temporally with locally generated copies of the pseudorandom ranging codes specific for each SV, for example, in case of a GPS receiver, the correlation processor 3 has the task of demodulating and tracking the coarse acquisition (C/A) GPS ranging signals. To perform such alignment the correlators processor 3 comprises an array of tracking modules 20, each of which comprises two numerically controlled oscillators 210 and 220, for further converting the IF signal and generating a baseband signal.

Each tracking module 20 comprises also a local Gold pseudorandom code generator 220, for generating a local replica of the C/A code corresponding to a particular GPS Space Vehicle. The Gold pseudorandom codes can be generated internally, for example by a tapped shift register, or, equivalently, extracted from a preloaded table or by any other technique.

The Gold code generator 220 is piloted by an independent numerically controlled C/A clock at about 1.023 MHz. The exact frequency of the local carrier frequency as well as the local C/A code frequency are adjusted, by an external CPU (not shown), to compensate for Doppler shift on the SV signal and local oscillator drift and bias. The incoming IF signal is multiplied by the in-phase (I) and quadrature (Q) components of the local carrier and by two time-shifted versions of the replica C/A code. The result of these operations is integrated for a programmable period of time, to generate an integrated correlation value, which is loaded into a tracking module register file 201 at the end of each integration period, to be accessible to the external CPU.

In addition to the prompt correlation value, the tracking module also generates a late correlation value and an early correlation value, which are obtained by multiplying the GPS signal with a ½ chip delayed and a ½ chip advanced version of the local replica code. These late and early correlation values are employed in the tracking algorithm, as it will be explained later.

The external CPU reads the correlation value stored in the registers 201 of each tracking module 20, and implements SV acquisition and tracking algorithms. In the first case the acquisition algorithm repeatedly shifts the replica C/A code generated in a tracking module 20, by issuing a series of "slew" commands to said tracking unit, until a sufficient correlation level is reached, whereupon the CPU switches to tracking mode. In order to speed up the acquisition and to reduce the load on the external CPU and on the bus, the tracking module can be instructed by the external CPU to autonomously slew the replica C/A code on a periodical basis, for example every 1, 2 or 4 C/A code periods.

In the tracking mode the external CPU stops the periodical slewing and continuously monitors the integrated correlation value, and also the early and late correlation values described above. By comparing the current, early and late correlation the CPU keeps the replica C/A code time-aligned with the C/A code coming from the Space Vehicle, by appropriately adapting the replica C/A code offset and the frequency of the C/A clock, as it is known in the art.

According to the tracking strategy chosen, the tracking module can also compute a difference between early and late correlation (early minus late or EML), or alternate between early, prompt and late correlations. All these modes of functioning can be selected by the CPU, for example by acting on appropriate registers in the register file 210, and are autonomously taken in charge by the tracking module 20, without the need to interfere with the C/A code generator 220.

During tracking, as long as the local and received C/A codes remain aligned, the 50 bps GPS navigation message can be extracted. At the same time the amount by which the replica C/A code must be shifted to keep aligned with the incoming signal is proportional to the pseudo-range between the receiver and one particular Space Vehicle. If at least four tracking modules 20 track four different space vehicles, and as soon as a sufficient portion of the navigation message has been downloaded, a positional fix is possible.

The complete start-up sequence, which is needed when the system is switched on without a previous knowledge of satellite orbit parameters, comprises then the two phases of:
1. Acquiring and tracking sufficient number of GPS C/A signals on several tracking modules, by delay-locking the locally generated C/A code with the incoming C/A codes. In principle a minimum of four satellites is needed, to solve the four unknown of the problem: latitude, longitude, altitude and time. A set of measurements is generated by the signal processor on each of the tracked signals.
2. Obtaining satellite orbit parameters and almanacs data. If this step is carried out by use of the GPS navigation data, it can be rather long, due to the low bandwidth of such signal. A minimum of 30 seconds is required for the transmission of a navigation frame. Since navigation data do not carry ranging information, they need not be downloaded from the space vehicle, however, and can also be obtained by other higher-bandwidth sources or, at least in part, stored in permanent or semipermanent tables inside the receiver.

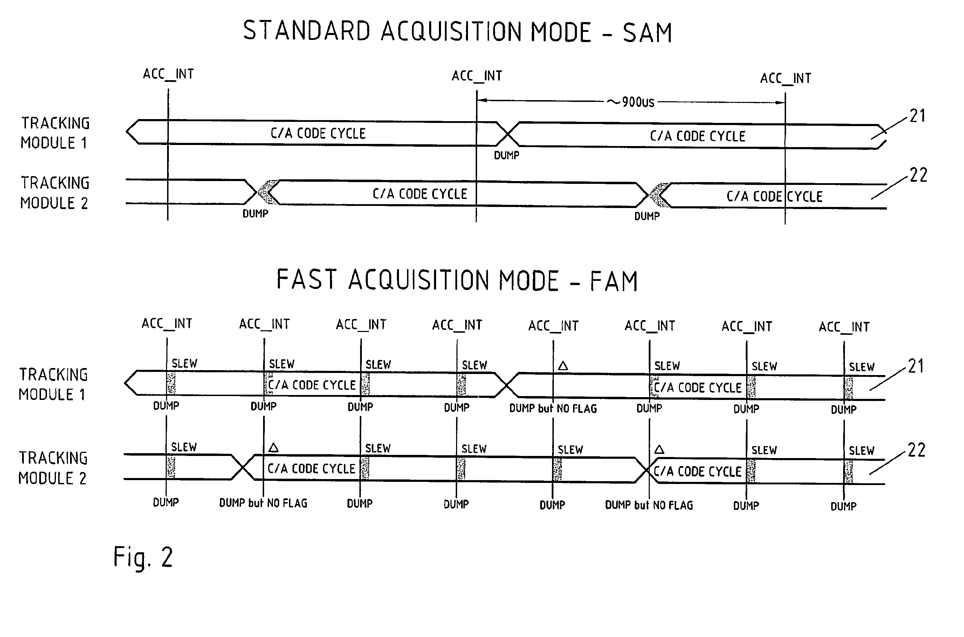

The tracking module of the signal processor of the invention comprises also a special fast acquisition mode, whose aim is to speed up the acquisition phase 1 above. Figure 2 shows a time diagram of the fast acquisition mode (FAM) compared to the standard acquisition and tracking mode (SAM).

During standard acquisition mode the integrated correlation values in each tracking module are dumped into the output register at each C/A code overflow, that is the end of each C/A code period. In this way the correlation value is maximized. Dump times are therefore independent and uncorrelated for each tracking module, being only determined by the phase of the replica C/A code. The upper part of figure 2 shows the relative timing of two tracking modules, one of which 21, is in tracking mode, while the other 22, is in acquisition mode, with the C/A code slewed at each code overflow. The CPU reads periodically the register 210 of all the tracking modules 21, 22 in order to detect the completion of acquisition phases, and to implement the chosen tracking strategy. This is done in correspondence with the periodical interrupt ACC_INT.

The lower part of figure 2 illustrates the fast acquisition mode FAM. FAM differs from SAM in that the accumulated data is dumped into the registers 210 on the ACC_INT signal, which is common to all tracking modules, instead of on C/A code overflow. Therefore the length of the integration period in the tracking modules is determined by the ACC_INT period. By reducing the integration time it is possible to proportionally reduce the acquisition time of correlation data. A direct consequence of the reduced integration period, however, is that lower correlation levels are expected. The reduced integration time also increases the signal processor frequency bandwidth. As a consequence the scanning of the frequency space necessary during SV acquisition can be executed with larger steps (frequency bin). This further reduces the SV acquisition time. Only strong SV signals with a high signal-to noise ratio will produce reliable correlation values which can be detected in FAM mode. A cold start is the main application of FAM mode, during which an exhaustive search for all the available SV is made.

In FAM mode each tracking module 20 automatically detects whether a C/A code overflow occurred within the last integration period. In this case data is dumped normally, but a special flag bit in the register file 210 is utilized to signal this to the CPU. This avoids interpreting a data bit transition of the GPS signal during FAM integration (which would result in a very low correlation value) as a C/A code misalignment. By checking the flag bit the software running on the CPU can skip over this data.

As with SAM mode, the slew repeat option allows automatic slewing of the C/A code by 1 chip (or more) one each new ACC_INT. Software can check new correlation values with the slewed C/A code sequence without intervening with C/A code generation. Again, to avoid the effect of a GPS data bit transition, C/A code slewing is automatically inhibited (even with the slew repeat option enabled) in the integration following a C/A code overflow.

## Claims

1. Signal processor for use in a navigation satellite receiver, comprising a plurality of tracking modules, for processing a plurality of navigation ranging signals, each tracking module comprising:
- a pseudorandom code generator, for generating a replica code sequence;
- a correlator, for obtaining a time-integrated correlation value between a navigation ranging signal and said replica code sequence; wherein said signal processor has a first functioning mode,
**characterized in that**
said signal processor is arranged to simultaneously dump said time-integrated correlation values from said multiplicity of tracking modules with a repetition period shorter than the proper period of said replica code sequence when in said first functioning mode.

2. The signal processor of claim 1, wherein said signal processor has a second functioning mode, and said signal processor is arranged to independently dump said time-integrated correlation values from said multiplicity of tracking modules, upon completion of a period of said replica code sequence, when in said second functioning mode.

3. The signal processor of claim 1, wherein said simultaneous dump of said time-integrated correlation values takes place on detection of an interrupt signal.

4. Signal processor according to one of the preceding claims, wherein said tracking modules are arranged to repeatedly temporally shift said replica code sequences until said replica code sequences are aligned with pseudorandom sequences contained in said navigation ranging signals.

5. The signal processor of claim 4, wherein said tracking modules comprise means to inhibit said temporal shift after completion of a period of said replica code sequence.

6. Signal processor according to one of the preceding claims, wherein said signal processor is arranged to monitor said time-integrated correlation values and to maintain an alignment condition between said replica code sequences and said pseudorandom sequences contained in said navigation ranging signals, by selectively temporally shifting said replica code sequences.

7. Signal processor according to one of the preceding claims, operatively arranged for selectively activating said first functioning mode at device start-up.

8. Signal processor according to one of the preceding claims, operatively arranged for selectively activating said first functioning mode when the strength of said navigation ranging signals exceeds a predefined value.

9. Signal processor according to one of the preceding claims, wherein said pseudorandom sequences are GPS C/A ranging codes.

10. GPS receiver, comprising a signal processor according to one of the preceding claims.

11. Method for acquiring a plurality of navigation ranging signals from a plurality of space vehicles comprising the steps of:
- correlating said navigation ranging signals with one of a plurality of local signals generated by a plurality of pseudorandom code generators, for obtaining a plurality of time-integrated correlation values;
- slewing said pseudorandom code generators until said local signals are time-aligned with pseudorandom signals contained in said navigation ranging signals;
**characterized in that**
said slewing of said pseudorandom code generators takes place simultaneously and periodically for all said code generators, with a repetition period which is shorter than the proper period of said local signals.

## Patentansprüche

1. Ein Signalprozessor zur Verwendung in einem Navigationssatellitenempfänger, der eine Vielzahl von Nachverfolgungs- bzw. Tracking-Modulen aufweist, um eine Vielzahl von Navigationsentfernungsmessungs- bzw. -Ranging-Signalen zu verarbeiten, wobei jedes Tracking-Modul Folgendes aufweist:
- einen Pseudozufallscodegenerator zum Generieren einer Replikcodesequenz;
- ein Korrelationselement zum Erhalten eines zeitlich integrierten Korrelationswertes zwischen einem Navigationsentfernungsmessungssignals und der Replikcodesequenz;
wobei der Signalprozessor einen ersten Betriebsmodus aufweist, **dadurch gekennzeichnet, dass**
der Signalprozessor angeordnet ist, um gleichzeitig die zeitlich integrierten Korrelationswerte von der Vielzahl von Tracking-Modulen mit einer Wiederholungsperiode abzuladen (dump), die kürzer ist als die korrekte Zeitdauer der Replikcodesequenz, wenn er sich im ersten Betriebsmodus befindet.

2. Signalprozessor nach Anspruch 1, wobei der Signalprozessor einen zweiten Betriebsmodus hat, und wobei der Signalprozessor angeordnet ist, um unabhängig die zeitlich integrierten Korrelationswerte von der Vielzahl von Tracking-Modulen abzuladen, und zwar auf den Abschluss einer Zeitdauer der Replikcodesequenz hin, wenn er sich im zweiten Betriebsmodus befindet.

3. Signalprozessor nach Anspruch 1, wobei das gleichzeitige Abladen der zeitlich integrierten Korrelationswerte auf die Detektion eines Unterbrechungssignals hin stattfindet.

4. Signalprozessor nach einem der vorhergehenden Ansprüche, wobei die Tracking-Module angeordnet sind, um wiederholt die Replikcodesequenzen zeitlich zu verschieben, bis die Replikcodesequenzen mit pseudozufälligen Sequenzen ausgerichtet sind, die in den Navigationsentfernungsmessungssignalen enthalten sind.

5. Signalprozessor nach Anspruch 4, wobei die Tracking-Module Mittel aufweisen, um eine zeitliche Verschiebung nach dem Abschluss einer Dauer der Replikcodesequenz zu verhindern.

6. Signalprozessor nach einem der vorhergehenden Ansprüche, wobei der Signalprozessor angeordnet ist, um die zeitlich integrierten Korrelationswerte zu überwachen und einen Ausrichtungszustand zwischen den Replikcodesequenzen und den pseudozufälligen Sequenzen beizubehalten, die in den Navigationsentfernungsmessungssignalen enthalten sind, und zwar durch selektives zeitliches Verschieben der Replikcodesequenzen.

7. Signalprozessor nach einem der vorhergehenden Ansprüche, der operativ angeordnet ist, um selektiv den ersten Betriebsmodus beim Hochfahren bzw. Starten der Vorrichtung zu aktivieren.

8. Signalprozessor nach einem der vorhergehenden Ansprüche, der operativ angeordnet ist, um selektiv den ersten Betriebsmodus zu aktivieren, wenn die Stärke der Navigationsentfernungsmessungssignale einen vordefinierten Wert überschreitet.

9. Signalprozessor nach einem der vorhergehenden Ansprüche, wobei die pseudozufälligen Sequenzen GPS-C/A-Entfernungsmessungscodes sind.

10. GPS-Empfänger, der einen Signalprozessor nach einem der vorhergehenden Ansprüche aufweist.

11. Ein Verfahren zum Akquirieren einer Vielzahl von Navigationsentfernungsmessungssignalen von einer Vielzahl von weltraumgestützten Flugkörpern, das die folgenden Schritte aufweist:
- Korrelieren von Navigationsentfernungsmessungssignalen mit einer Vielzahl von lokalen Signalen, die durch eine Vielzahl von Generatoren von pseudozufälligem Code generiert werden, um eine Vielzahl von zeitlich integrierten Korrelationswerten zu erhalten;
- Verzerren (slew) der Generatoren von pseudozufälligem Code, bis die lokalen Signale zeitlich mit pseudozufälligen Signalen ausgerichtet sind, die in Navigationsentfernungsmessungssignalen enthalten sind;
**dadurch gekennzeichnet, dass**
das Verzerren der pseudozufälligen Codegeneratoren gleichzeitig und periodisch für alle Codegeneratoren stattfindet, wobei eine Wiederholungsdauer kürzer ist als die korrekte Dauer der lokalen Signale.

## Revendications

1. Processeur de signal pour utilisation dans un récepteur de satellites de navigation, comprenant une pluralité de modules de poursuite, pour traiter une pluralité de signaux de mesure de distance, chaque module de poursuite comprenant :
un générateur de codes pseudoaléatoires, pour générer des séquences de codes de reproduction ;
un corrélateur pour obtenir une valeur de corrélation intégrée dans le temps entre un signal de mesure de distance et la séquence de codes de reproduction ;
le processeur de signal ayant un premier mode de fonctionnement,
**caractérisé en ce que**
le processeur de signal est agencé pour vider simultanément les valeurs de corrélation intégrées dans le temps à partir de la pluralité de modules de poursuite avec une période de répétition plus courte que la période propre de la séquence de codes de reproduction lorsqu'il est dans le premier mode de fonctionnement.

2. Processeur de signal selon la revendication 1, le processeur de signal ayant un deuxième mode de fonctionnement, et le processeur de signal étant agencé pour vider indépendamment les valeurs de corrélation intégrées dans le temps à partir de la pluralité de modules de poursuite, à l'achèvement d'une période de la séquence de codes de reproduction, lorsqu'il est dans le deuxième mode de fonctionnement.

3. Processeur de signal selon la revendication 1, dans lequel la vidange simultanée des valeurs de corrélation intégrées dans le temps a lieu à la détection d'un signal d'interruption.

4. Processeur de signal selon l'une quelconque des revendications précédentes, dans lequel les modules de poursuite sont agencés pour décaler temporellement de façon répétitive les séquences de code de reproduction jusqu'à ce que les séquences de code de reproduction soient alignées sur des séquences pseudoaléatoires contenues dans les signaux de mesure de distance.

5. Processeur de signal selon la revendication 4, dans lequel les modules de poursuite comprennent des moyens pour empêcher ledit décalage temporel après l'achèvement d'une période de séquence de codes de reproduction.

6. Processeur de signal selon l'une quelconque des revendications précédentes, le processeur de signal étant agencé pour surveiller les valeurs de corrélation intégrées dans le temps et pour maintenir un état d'alignement entre les séquences de codes de reproduction et les séquences pseudoaléatoires contenues dans les signaux de mesure de distance, en décalant temporellement sélectivement les séquences de codes de reproduction.

7. Processeur de signal selon l'une quelconque des revendications précédentes, agencé fonctionnellement pour activer sélectivement le premier mode de fonctionnement au démarrage d'un dispositif.

8. Processeur de signal selon l'une quelconque des revendications précédentes, agencé fonctionnellement pour activer sélectivement le premier mode de fonctionnement lorsque l'intensité des signaux de mesure de distance dépasse une valeur prédéfinie.

9. Processeur de signal selon l'une quelconque des revendications précédentes, dans lequel les séquences pseudoaléatoires sont des codes de mesure de distance GPS C/A.

10. Récepteur GPS, comprenant un processeur de signal selon l'une quelconque des revendications précédentes.

11. Procédé pour acquérir une pluralité de signaux de mesure de distance provenant d'une pluralité de véhicules spatiaux comprenant les étapes suivantes :
corréler les signaux de mesure de distance avec l'un d'une pluralité de signaux locaux générés par une pluralité de générateurs de codes pseudoaléatoires, pour obtenir une pluralité de valeurs de corrélation intégrées dans le temps ;
faire balayer les générateurs de codes pseudoaléatoires jusqu'à ce que les signaux locaux soient alignés temporellement sur des signaux pseudoaléatoires contenus dans les signaux de mesure de distance ;
**caractérisé en ce que**
ledit balayage des générateurs de codes pseudoaléatoires a lieu simultanément et périodiquement pour tous les générateurs de codes, avec une période de répétition qui est plus courte que la période propre des signaux locaux.
